(19) **Europäisches Patentamt**
**European Patent Office**
**Office européen des brevets**

(11) **EP 4 764 487 A1**

(12) # EUROPEAN PATENT APPLICATION

(43) Date of publication:
**24.06.2026 Bulletin 2026/26**

(21) Application number: **24221196.9**

(22) Date of filing: **18.12.2024**

(51) International Patent Classification (IPC):
*G01N 27/9013* (2021.01)

(52) Cooperative Patent Classification (CPC):
**G01N 27/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Universiteit van Amsterdam
1012 WX Amsterdam (NL)**

• **Stichting Hogeschool van Amsterdam
1091 GH Amsterdam (NL)**

(72) Inventors:
• **Sprik, Rudolf
1012 WX AMSTERDAM (NL)**
• **Schoemaker, Christiaan
1012 WX AMSTERDAM (NL)**

(74) Representative: **De Vries & Metman
Overschiestraat 180
1062 XK Amsterdam (NL)**

(54) **NON-DESTRUCTIVE TESTING OF A LAMINATED MULTI-COMPONENT OBJECT UNDER TEST**

(57) The embodiments in this disclosure relate to non-destructive testing of a laminated multi-component object under test, and, in particular, though not exclusively, to systems and methods for non-destructive testing of a laminated multi-component object under test, the object under test at least comprising an insulating material and at least one electrically conductive material, the at least one electrically conductive material comprising a metal structure, the at least one electrically conductive material being at least partly embedded in the insulating material. According to some embodiments, the system comprises:

a sensor (110) comprising a sensing coil (111), the sensor (110) being placeable in a vicinity of a surface (151) of the object under test (150),

an excitation circuit (120) being communicatively connected to the sensing coil (111) and being configured to excite the sensing coil (111) to oscillations,

a reference measure storage (140) containing at least one reference impedance measure, the at least one reference impedance measure being representative for the impedance of the sensing coil (111) at an object under test (150) in a reference state and comprising a reference inductance measure and a reference resistance measure, and

an evaluation circuit (130) being communicatively connected to the excitation circuit (120) and the reference measure storage (140),

wherein the evaluation circuit (130) is configured to control the excitation circuit (120) and to evaluate oscillations of the sensing coil (111), thereby determining an impedance measure for the sensing coil (111), wherein the impedance measure comprises an inductance measure representative for an inductance of the sensing coil (111) and a resistance measure representative for a resistance of the sensing coil (111),

wherein the evaluation circuit (130) is further configured to access the at least one reference impedance measure and to evaluate a determined impedance measure in view of the at least one reference impedance measure, thereby determining a deviation between the determined impedance measure and the at least one reference impedance measure, and

wherein the evaluation circuit (130) is further configured to determine a state of the at least one electrically conductive material (152, 153) based on determined deviation.

FIG. 2

## Description

Technical field

The embodiments in this disclosure relate to non-destructive testing of a laminated multi-component object under test, and, in particular, though not exclusively, to systems and methods for non-destructive testing of a laminated multi-component object under test, the object under test at least comprising an insulating material and at least one electrically conductive material, the at least one electrically conductive material comprising a metal structure, the at least one electrically conductive material being at least partly embedded in the insulating material. Beside the metal structure, the electrically conductive material might additionally comprise a structure with medium conductivity, for instance carbon fibres. Examples of such an object under test may include a laminated carbon fibre reenforced material with embedded metal structure.

Background

Laminated multi-component material became a popular construction material that is widely used in an ever growing number of industries, ranging from the automotive and aerospace to energy sector and civil engineering sector, just to name a few, but not limiting examples. A popular example of laminated multi-component materials is carbon fibre reinforced polymer (CFRP).

Laminated multi-component materials can be found in many daily life commercial products, such as tennis rackets, bicycles and suitcases. They are also used at high end products, like shells of cars, boats or airplanes or at rotor blades of helicopters. These few examples show that there is a huge variety of demands on the laminated multi-component material. Breaking of a tennis racket or a suitcase may have quite a different impact than breaking of a boat hull, an airplane shell or a rotor blade. Especially at security relevant applications, a certain quality of the laminated multi-component material has to be guaranteed during the production process and thoroughly tested during maintenance.

A variety of non-destructive testing techniques exists for testing laminated multi-component materials, hereinafter also named objects under test. At a very simple test, the object under test is inspected visually. A flaking coating or a change at the surface structure can indicate a structural deficiency inside the object under test. However, a structural deficiency does not necessarily have to result in a visible change at the surface of the object under test. On the other hand, not each change at the surface of the object has to result from a structural deficiency.

At another test, also known as "tap test", a tapping device, like a small hammer or a coin, is repeatedly tapped on the surface of the object under test. Changes of emitted sound is indicative for the internal structure of the object under test. However, this test only provides good results if the structural deficiency are already quite severe. Starting structural deficiencies are hard to spot. Besides that, the obtainable insights are limited.

Another testing technique is called thermography which relies on pulsed heating of the object under test. A infrared camera detects the reaction of the object under test. Different structural deficiencies have different impact on the temperature distribution so that the image taken by the infrared camera can provide some insight regarding the state of the object under test. However, the heating and cooling of the object under test needs quite some test time. Besides that, the object under test must not be sensitive to heat pulses.

For the production of high end products, more evolved tests are known in the art. One testing method uses X-ray, where the object under test is X-rayed. This approach can be used for two-dimensional (e.g. "classical" X-ray) or for three-dimensional measurements (e.g. computer tomography (CT)). However, these techniques demand expensive equipment which is frequently bulky and not always suitable for bigger objects under test.

For bigger objects under test, like a hull of an airplane, ultrasonic testing is known in the art. Ultrasonic waves are radiated towards the object under test and the reflections at the object are measured and evaluated. This technique can provide advanced insights of the state of the object under test. It can also be used at bigger objects, like a rotor blade of a helicopter or a hull of a boat or an airplane. However, ultrasonic testing is relatively slow; one square meter per hour is already quite fast. For some objects under test, this test speed is acceptable. Even rotor blades of a helicopter can be examined within a decent period of time. For even bigger objects like the hull of a ship or of an aircraft, the test of the whole hull takes a considerable amount of time. Short turnaround times, as demanded by airlines, etc., cannot be achieved. Besides that, ultrasonic testing requires highly experienced technicians. This increases the costs of the test even further.

Another testing technique uses eddy current sensors. For example, DE 10 2010 048 917 A1 discloses a sensor array for testing laminated material, where the sensor array comprises several eddy current coils. The coils can be operated individually as sending or receiving coils. DE 10 2013 103 004 A1 refers to measuring non-metallic object under test, e.g. CFRP. An eddy current sensor is used to measure the influence of the non-metallic object under test on the eddy current sensor by evaluating the eddy current losses. A second sensor, e.g. an ultrasonic sensor, measures the distance to the object under test. This technique allows for quicker testing, but seems to be limited regarding the measurable objects under test.

Testing gets even more challenging, if the object under test contains more than one embedded material. An example of such a laminated multi-component material is laminated carbon fibre reenforced material with embedded metal structure, as used in many newly developed aircrafts, for instance. The metal structure can be formed by an aluminium honeycomb structure or a copper mesh, for instance. The carbon fibres stabilize the material, while the metal structure supports distribution of electric load/current, e.g. resulting from a lightning strike (as, for instance, addressed by L. Herbert: "Design of lightweight perforated copper foil for lightning protection of fiber reinforced plastic, downloadable at https://multimedia.3m.com/mws/media/2285284O/design-of-lightweight-perforated-copper-foil.pdf). These laminated materials have different damage characteristics compared to conventional metallic structures or CFRP. Damages are often not visible from the outside, which makes it difficult to spot potentially damaged parts. The tap test does not provide sufficient information about the object under test. The ultrasonic test techniques are slow. The eddy current system disclosed in DE 10 2013 103 004 A1 seems to be unsuitable. Nevertheless, it is important to evaluate the structural integrity of the laminated material. Therefore, there is a need for a reliable and quick non-destructive testing technique for laminated multi-component objects under test, which at least comprises an insulating material and a metal structure, where the metal structure is at least partly embedded in the insulating material.

Summary

As will be appreciated by one skilled in the art, aspects of the present disclosure may be embodied as a system, a method or - to a certain extend - as a computer program product. Accordingly, aspects of the present disclosure may take the form of an entirely hardware embodiment or a combining of software (including firmware, resident software, micro-code, etc.) and hardware aspects that may all generally be referred to herein as a "circuit," "module" or "system." Functions described in this disclosure may be implemented as an algorithm executed by a microprocessor of a computer. Furthermore, at least some aspects of the present disclosure may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electric, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present disclosure may be written in any combination of one or more programming languages, including an object-oriented programming language such as Java(TM), Smalltalk, Rust, C#, C++, Python, or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described below with reference to flowchart illustrations and/or block diagrams of methods, apparatus (systems), and computer program products according to embodiments of the present disclosure. It will be understood that blocks of the flowchart illustrations and/or block diagrams, and combinations of blocks in the flowchart illustrations and/or block diagrams can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. Additionally, the Instructions may be executed by any type of processors, including but not limited to one or more digital signal processors (DSPs), general purpose microprocessors, application specific integrated circuits (ASICs), field programmable logic arrays (FPGAs), or other equivalent integrated or discrete logic circuitry.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In an aspect, embodiments in this disclosure relate to a system for non-destructive testing of a laminated multi-component object under test, the object under test at least comprising an insulating material and at least one electrically conductive material, the at least one electrically conductive material comprising a metal structure, the electrically conductive material being at least partly embedded in the insulating material, the object under test preferably being a laminated carbon fibre reenforced material with embedded metal structure, the system comprising:

a sensor comprising a sensing coil, the sensor being placeable in a vicinity of a surface of the object under test,

an excitation circuit being communicatively connected to the sensing coil and being configured to excite the sensing coil to oscillations,

a reference measure storage containing at least one reference impedance measure, the at least one reference impedance measure being representative for the impedance of the sensing coil at an object under test in a reference state and comprising a reference inductance measure and a reference resistance measure, and

an evaluation circuit being communicatively connected to the excitation circuit and the reference measure storage,

wherein the evaluation circuit is configured to control the excitation circuit and to evaluate oscillations of the sensing coil, thereby determining an impedance measure for the sensing coil, wherein the impedance measure comprises an inductance measure representative for an inductance of the sensing coil and a resistance measure representative for a resistance of the sensing coil,

wherein the evaluation circuit is further configured to access the at least one reference impedance measure and to evaluate a determined impedance measure in view of the at least one reference impedance measure, thereby determining a deviation between the determined impedance measure and the at least one reference impedance measure, and

wherein the evaluation circuit is further configured to determine a state of the at least one electrically conductive material based on determined deviation.

Hence the system provides capabilities of quick and reliable non-destructive testing. Using an eddy current sensor enables a good insight into the internal structure of the laminated multi-component material under test. By evaluating both an inductance measure and an resistance measure, a great variety of different components inside the object under test can be handled. It is even possible to evaluate objects with an insulating material, a material with a high conductivity (i.e. metal, like aluminium or copper) and a material with a medium conductivity (e.g. carbon fibres). By suitable adaptions of the excitation circuits, the depth of the measurement inside the object under test can be controlled and/or the detection of certain defects can be influenced. This allows for even better insights regarding the internal structure of the object under test. Even anisotropy of conductivity within the object under test does not result in unsolvable measuring situations.

In an embodiment, the sensor is displaceable in a direction parallel to the surface of the object under test and/or in a direction perpendicular to the surface of the object under test and/or in a direction changing the orientation of the sensor relative to the surface of the object, wherein, during displacing, the evaluation circuit determines multiple inductance and resistance measures, and wherein the evaluation circuit is configured to generate an array of measures based on the determines multiple inductance and resistance measures. By displacing the sensor in a direction parallel to the surface, several locations of the surface of the object under test can be evaluated. By displacing the sensor in a direction perpendicular to the surface, different depths within the object under test can be measured. By changing the orientation of the sensor relatively to the surface of the object under test, measured characteristics of the object under test can be varied. For example, when tilting the sensor with respect to a direction perpendicular to the surface of the object under test, the effects of a component shielding another component within the multi-component object under test can be mitigated. For example, when rotating the sensor around an axis perpendicular to the surface of the object under test, the orientation of structures inside the multi-component object under test can be measured with a rectangular sensor coil.

In an embodiment, the system additionally comprises an displacement sensor, wherein displacement of the sensor and of the displacement sensor are coupled with each other and wherein the displacement sensor is configured to measure displacement relative to the surface of the object under test, and wherein the displacement sensor is communicatively connected to the evaluation circuit and configured to output displacement measures to the evaluation circuit. Hence, moving the sensor parallel to the surface of the object under test can be observed. In this way, the displacement of two locations of measurement can be measured.

In an embodiment, the system additionally comprises a liftoff sensor, wherein displacement of the sensor and of the liftoff sensor are coupled with each other, wherein the liftoff sensor is configured to measure the distance between the sensor and the surface of the object under test, and wherein the liftoff sensor is communicatively connected to the evaluation circuit and configured to output liftoff measures to the evaluation circuit. Hence, changes of the distance between the sensor and the object under test can be observed and, if needed, can be taken into account at evaluating the impedance measure of the sensing coil.

In an embodiment, the system additionally comprises an orientation sensor, wherein orientation changes of the sensor and of the orientation sensor are coupled with each other, wherein the orientation sensor is configured to measure a tilt and/or orientation change of the sensor, particularly with regard to the surface of the object under test, and wherein the orientation sensor is communicatively connected to the evaluation circuit and configured to output orientation measures to the evaluation circuit. By tracking the tilt and/or orientation change of the sensor, comparability of the impedance measure with the reference impedance measure can be improved. Additionally, changes of orientation and their effect on the determined impedance measure can be evaluated.

In an embodiment, the system additionally comprises a manipulator, wherein the sensor is attached to a moveable part of the manipulator, wherein the manipulator is configured to displace the sensor in at least one direction parallel and/or perpendicular to the surface of the object under test. Hence, automated measurement of the surface of an optical test can be supported. Embodiments of such a manipulator can include a robot arm with the sensor being arranged at the tool tip, a scanning frame with the sensor being attached to a moveable scanning head, or the like.

In an embodiment, the sensing coil is connected to a capacitor, thus forming an oscillating circuit, and wherein the excitation circuit excited the oscillating circuit to oscillations at a oscillating frequency, preferably a resonant frequency. By using such oscillating circuit, the measurement speed can be improved. In one embodiment, the inductance measure is determined by evaluating the oscillating frequency of the oscillating circuit and/or the resistance measure is determined by evaluating the energy dissipating in the oscillating circuit.

In an embodiment, the oscillating circuit additionally comprises an adaptable capacitance and/or an adaptable inductance, thus allowing adapting the resonant frequency of the oscillating circuit to the object under test. Hence, the frequency of the signal within the sensing coil can be adapted. This allows for adaptable frequency of the radiated electromagnetic field and, thus, for an adaptable measuring depth within the object under test. In one embodiment, the adaptable capacitance is formed by the capacitor of the oscillating circuit itself, where its capacitance is adaptable. This can be implemented by a varactor, for instance. In another embodiment, one or several additional capacitor/s and/or one or several additional inductance/s is/are connected to the oscillating circuit. The additional component/s can be connected in series with the oscillating circuit or one of its components or can be connected in parallel with the oscillating circuit or one of its components. Adaptability can result from adaptable components or from connecting/disconnecting the additional component/s to the oscillating circuit.

In an embodiment, the sensing coil is part of an impedance bridge, wherein the impedance of the sensing coil is evaluated by evaluating the balance of the impedance bridge. Hence circuitry, which uses only inductances, can be achieved.

In yet another embodiment, the impedance measure of the sensing coil is determined using a pulsed measurement or a vector network analyser (VNA).

In an embodiment, the size and/or shape of the sensing coil is adapted to the object under test. By adapting the size, the lateral resolution of the sensor and/or the measurable part of the surface of the object under test can be adapted. A relatively small sized sensing coil allows for high lateral resolution. However, the measurable part of the surface of the object under test can be relatively small. Bigger sensing coils measure a bigger part of the surface of the object under test, but the lateral resolution is limited. By adapting the size of the coil, the sensor can be adapted to the respective measuring task and the structure sizes that should be measured with in the object under test. Also the shape can have an impact on the measurement results. With a circular measuring coil, details of the internal structure of the object under test have less influence on the sensor signal. At a CFRP with embedded metal structure, the orientation of the carbon fibres is not relevant for the measurement results. With a rectangular shaped measuring coil, the orientation of the carbon fibres can be measured, as an orientation of the sensing coil parallel to the carbon fibres will result in different measurement values than an orientation of the sensing coil perpendicular to the carbon fibres. Thus, adaption of the shape of the sensing coil allows for focusing on different measuring aspects.

In an embodiment, the sensor comprises several sensing coils, wherein the sensing coils are displaced relatively to each other, and wherein, for each of the several sensing coils, an impedance measure is determined, respectively. Hence, several locations of the surface of the object under test can be measured simultaneously. The several impedance measures generated with the several sensing coils can be used in various ways. It is possible to determine a deviation from one or several reference impedance measures for each of the several impedance measures. However, it is also possible that the several impedance measures generated with the several sensing coils are compared with each other. In this regard, one of several impedance measures might be regarded as an impedance measure according to the present disclosure and the remaining of the several impedance measures might be regarded as reference impedance measures according to the present disclosure. Combinations of these approaches are possible.

In an embodiment, a ferromagnetic material is arranged at the centre of the sensing coil, wherein the ferromagnetic material preferably is a ferrite. Hence, the radiated electromagnetic field can be focused. In one embodiment, coil is wound around the ferromagnetic material. This is particularly useful, if the coil is formed by wound conducting material. In another embodiment, the ferromagnetic material is placed at the space surrounded by woundings of the coil. This embodiment can be used at coils formed at a printed circuit board (PCB), where the ferromagnetic material is put to a hole in the PCB or attached (e.g. clued) on or embedded in the PCB.

In an embodiment, the evaluation circuit is configured to store a determined impedance measure in the reference measure storage, thus creating a new reference impedance measure for future usage. Hence, a determined impedance measure can be a reference impedance measure for future measurements. This allows, for instance, for comparing the state of the at least one electrically conducting material at one location of the object under test with another location of the object under test. This is particularly helpful, if several measurements should result in substantially the same measuring results. This embodiment can also be used for evaluating changes of the state with time.

In an embodiment, the system additionally comprises an output device, wherein the output device is connected to the evaluation circuit and wherein the evaluation circuit is configured to output a determined state of the object under test via the output device. The output device can be an interface to a user, e.g. for outputting evaluation results, or can be an interface to other devices, e.g. a storage, a database, a processing device, etc., to name just a few, but not limiting examples. Using the output device, determined state information can be output for various purposes. In this way, determined state information can be added to a data collection, can be further analysed and/or can be further interpreted, just to name a few possible usages of output determined state information.

In another aspect, embodiments of this disclosure relates to the usage of the disclosed system for non-destructive testing a laminated multi-component object under test, the object under test at least comprising an insulating material and at least one electrically conductive material, the at least one electrically conductive material comprising a metal structure, the at least one electrically conductive material being at least partly embedded in the insulating material, the object under test preferably being a laminated carbon fibre reenforced material with embedded metal structure. Hence a quick and reliable testing technique for these laminated objects under test can be provided.

In yet another aspect, embodiments of this disclosures relates to a method for non-destructive testing of a laminated multi-component object under test, the object under test at least comprising an insulating material and at least one electrically conductive material, the at least one electrically conductive material comprising a metal structure, the at least one electrically conductive material being at least partly embedded in the insulating material, the object under test preferably being a laminated carbon fibre reenforced material with embedded metal structure, preferably for using a system according to the present disclosure, the method comprising:

bringing a sensor in vicinity of a surface of the object under test, the sensor comprising a sensor coil,
exciting the sensor coil to oscillations, thereby radiating electromagnetic radiation towards the object under test,
determining a determined impedance measure for the sensing coil, the determined impedance measure comprising an inductance measure representative for an inductance of the sensing coil and a resistance measure representative for a resistance of the sensing coil,

accessing at least one reference impedance measure, the at least one reference impedance measure being representative for the impedance of the sensing coil at an object under test in a reference state and comprising a reference inductance measure and a reference resistance measure,

evaluating a determined impedance measure in view of the at least one reference impedance measure, thereby determining a deviation between the determined impedance measure and the at least one reference impedance measure, and

determining a state of the at least one electrically conductive material based on determined deviation.

The present disclosure may also relate to a computer program product comprising software code portions configured for, when run in the memory of a computer, executing the method steps according to any of the process steps described above.

The present disclosure will be further illustrated with reference to the attached drawings, which schematically will show embodiments according to the present disclosure. It will be understood that the present disclosure is not in any way restricted to these specific embodiments.

Brief description of the drawings

**Fig. 1** depicts a block diagram with functional elements of an embodiment of a system according to the present disclosure;

**Fig. 2** depicts an angular view of a measuring situation with a sensing coil in vicinity of a laminated multi-component material as object under test;

**Fig. 3** depicts a cross sectional view of a measuring situation with an object under test with different structural deficiencies;

**Fig. 4** depicts a diagram showing an inductance measure over an resistance measure and the impact of various characteristics of the sensing coil;

**Fig. 5** depicts a schematic of an embodiment of circuitry of the sensing coil as part of an oscillating circuit and excited by an excitation circuit; and

**Fig. 6** depicts a diagram of an embodiment of a method according to the present disclosure.

Description of the embodiments

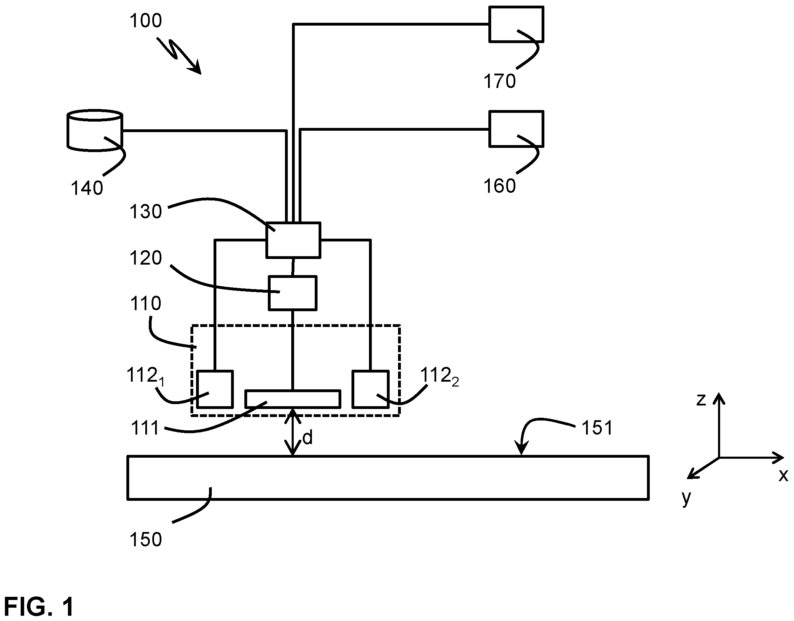

Fig. 1 depicts a block diagram with functional elements of an embodiment of the system according to the present disclosure. The presence of functional element in this embodiment does not necessarily mean that this functional element has to be present at each embodiment of the present disclosure. Additionally, it should be noted that other functional elements might be added to the system. Besides that, functional elements can be combined with each other and/or being implemented in one device. It is not mandatory that the single functional elements are well defined devices and/or entities within the system.

Connections between the single functional elements can be provided in various ways. Wired techniques can be used as well as wireless techniques. A wired connection can include conductive material on a printed circuit board (PCB), twisted pair wires, ribbon cable, or PCB connectors, just to name a couple of possible examples. A wireless connection can include radio links or optical links in various embodiments. The single connections between the single functional elements can transmit analogue or digital signals. A decision for a respective connection technique and transmitted signals can be based on the functional elements that need to be connected. Two connected functional elements do not necessarily require a direct connection between each other. In fact, one or several further elements can be placed within this connection. Such a connection is referred to as "communicatively connected" functional elements. E.g. between a sensor and an evaluation circuit, an amplifier, an analog-to-digital-converter, one or several filters and/or the like may be located in the connection.

System 100 comprises a sensor 110, an excitation circuit 120, an evaluation circuit 130 and a reference measure storage 140. Sensor 110 is located in vicinity of a surface 151 of a laminated multi-component object under test 150. Sensor 110 at least comprises a sensing coil 111. Excitation circuit 120 is connected to the sensing coil 111 and configured to excite the sensing coil 111 to oscillations. Evaluation circuit 130 is connected to the excitation circuit 120 and configured to control the excitation circuit 120 and to evaluate oscillations of the sensing coil 111. Evaluations circuit 130 is additionally connected to the reference measure storage 140 and configured to access at least one reference impedance measure stored in the reference measure storage 140. As already indicated before, functionalities of the sensor 110, the excitation circuit 120, the evaluation circuit 130 and the reference measure storage 140 and respective circuitry might also be combined, even though they are shown as separate blocks in Fig. 1. For instance, excitation circuit 120 can be part of sensor 110. It is also possible that, that the whole system 100 is integrated in a single device, where some of the circuits are implemented by software.

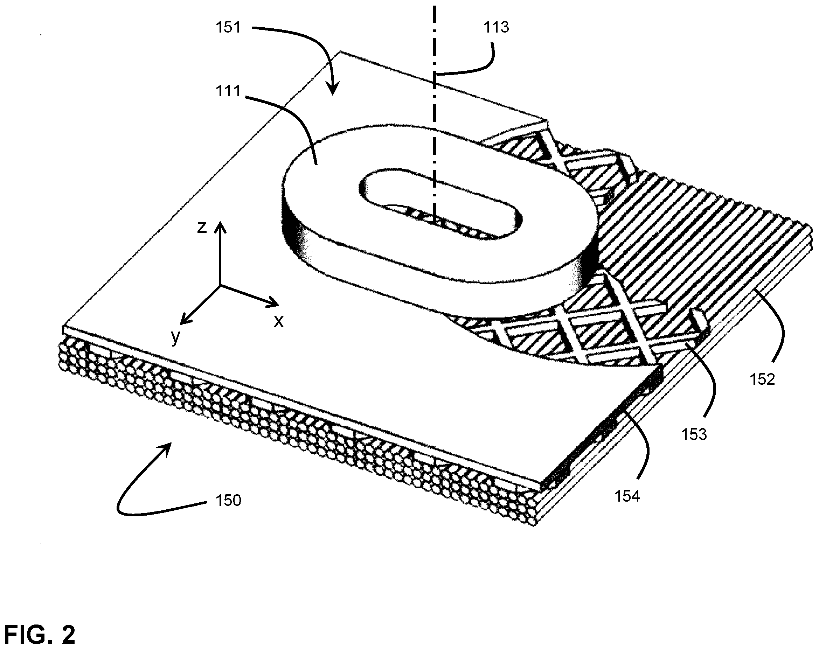

Throughout this disclosure, the term "sensor" is generally used for a sensing part of system 100, i.e. a part of the system 100 that captures information regarding object under test 150. As important part, sensor 110 comprises one or several sensing coils 111, where just one sensing coil 111 is shown in Fig. 1. The one or several sensing coils 111 are used to radiate electromagnetic radiation towards the object under test 150 and to generate eddy currents in electrically conductive material 152, 153 (shown in Fig. 2) embedded in the object under test 150. That means, that the one or several sensing coils 111 should be designed in such a way that it can radiate and/or detect electromagnetic radiation. Radiating and detecting electromagnetic radiation can be fulfilled by a single sensing coil 111. In this case, the radiation is detected by evaluating changing characteristics of the sensing coil 111 caused by the object under test 150. However, it is also possible using separate sending and receiving coils. Both embodiments are regarded as being in line with the present disclosure.

The one or several sensing coils 111 can be formed by a conductive material wound around a coil body, e.g. a plastic tube, or by a conductive material arranged on and/or in a PCB. It is also possible that there is no carrier for the conductive material and that the coil is wound as an air coil. The windings may be embedded in resin. When using a PCB, the windings can be on one or several layers of conductive material on and/or in the PCB. The PCB can be formed by a rigid material or a flexible material. The latter implementation allows for adapting the sensing coil 111 to the object under test, e.g. if surface 151 is curved. At the centre of the coil, a ferromagnetic material can be arranged, for focussing the electromagnetic field generated by coil 111. In general, windings of sensing coil 111 are arranged in such a way that the sensing coil 111 has a coil axis 113 (shown in Fig. 2). The coil axis 113 may be defined at the centre of the coil 111 and perpendicular to the windings of the coil 111. When using sensor 110, it can be beneficial in some measuring situations, if the coil axis 113 is perpendicular to surface 151 of the object under test 150 or does not deviate too much from this perpendicular direction (e.g. less than 10° or less than 20°). This allows for closer approach of the sensor 110 to the surface 151. In other measuring situations, the sensor 110 can be tilt, as a tilted sensing coil 111 can induce a magnetic field that is more sensitive to layering parallel to the surface 151. In these cases, also larger deviations from an perpendicular direction can be beneficial. However, also in these cases, the deviation should not be too large, as a too large deviation can result in unsatisfactory measurement results. Therefore, the tilt with regard to a direction perpendicular to surface 151 is preferably less than 60°, particularly preferably less than 45°, more particularly preferably less than 30°.

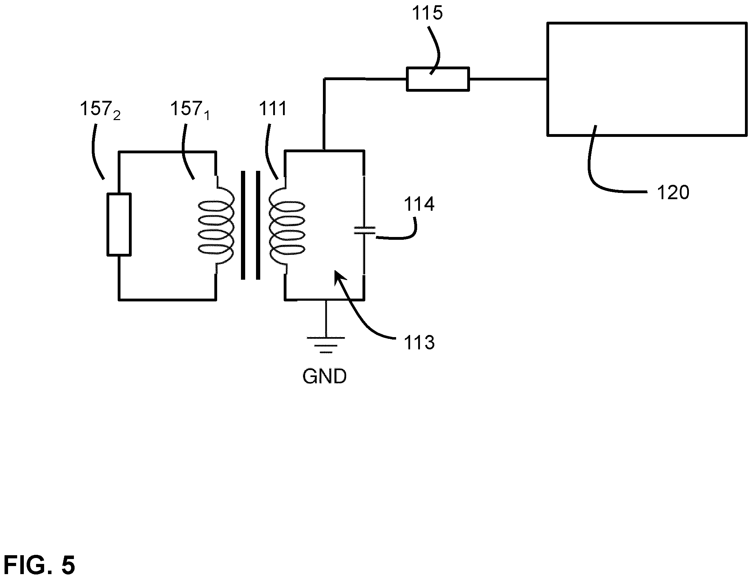

The excitation circuit 120 is configured to excite the sensing coil 111 to oscillations. Oscillations of the sensing coil 111 means that an alternating current flows through the windings of coil 111. This alternating current can have various shapes, e.g. rectangular, sinewave, triangular or tooth-shaped, just to name some, but not limiting examples. This alternating current results in alternating electromagnetic field that is radiated as an electromagnetic radiation towards the object under test 150. The excitation circuit 120 can excite the sensing coil 111 in different manners, as long as the signal input to the sensing coil 111 and/or its adjacent circuitry triggers an alternating current through the sensing coil 111. The implementation of the excitation circuit 120 can depend on how the sensing coil 111 is connected with adjacent circuitry. This aspect will be addressed in further detail in connection with Fig. 5 and the embodiment described there.

The evaluation circuit 130 of the present disclosure can fulfil several purposes within system 100. The evaluation circuit 130 can be regarded as a connection point between sensing coil 111 and an output device 160, i.e. between the generation of a sensor signal and the output of an evaluated state derived from the sensor signal. For this purpose, the evaluation circuit 130 may have access to required information and functional elements. In some embodiments, the evaluation circuit 130 can be a central managing entity of the whole system 100.

The evaluation circuit 130 is connected to the excitation circuit 120 and can control the excitation circuit 120. This may include activation and deactivation of measurement, selection of an oscillating frequency, adaption of a current level through the sensing coil, or addressing a single sensing coil out of several sensing coils, just to name some, but not limiting examples. The interaction between the evaluation circuit 130 and the excitation circuit 120 may be as strong that the both circuits might even be regarded as one entity.

The evaluation circuit 130 is additionally configured to evaluate oscillations of the sensing coil 111. At this evaluation, evaluation circuit 130 determines an impedance measure for the sensing coil 111 in the current measuring situation, i.e. at the current object under test at a current position and orientation with a current distance, etc. The evaluation circuit 130 can use various techniques to arrive at the impedance measure. One approach may include extracting characteristics of the alternating current flowing through the sensing coil 111, e.g. counting the number of zero crossings during a predefined time interval and/or measuring dissipated energy. Another approach may include evaluation of a signal generated and/or pre-processed by the excitation circuit 120. Such a signal may, for instance, include a response to a voltage pulse or the voltage across the impedance bridge to which the sensing coil 111 belongs to or settings of elements of this impedance bridge.

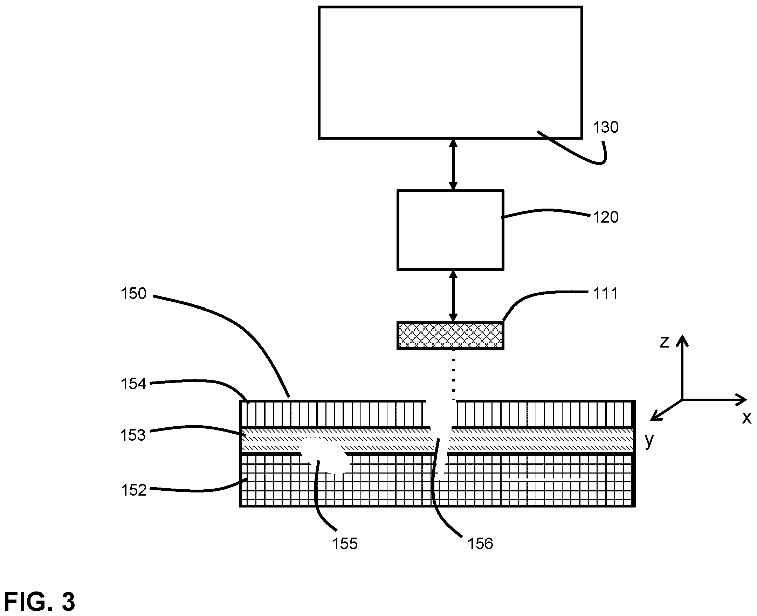

Another task of the evaluation circuit 130 is putting a determined impedance measure into relation to one or several reference impedance measures. This "putting into relation" may be based on the object under test, the expected insights resulting from the testing, the measurement procedure, and/or the like. This "putting into relation" may comprise a simple comparison, whether the determined impedance measure is within a predefined margin of a reference impedance measure. This "putting into relation" may also comprise evaluating, whether the determined impedance measure or a series of consecutively determined impedance measures suits to an expected profile of impedance measures defined by several reference impedance measures. In each of those cases, the evaluation circuit 130 determines a deviation between the determined impedance measure and the at least one reference impedance measure. This deviation is used to determine the state of the at least one electrically conductive material within the object under test. Determination of the state will be addressed in further details with reference to Fig. 3.

The capability of "putting into relation" can be implemented in different ways. According to one embodiment, this capability can be implemented in a "classical" way, e.g. by comparing a determined measure with a reference measure, comparing a determined measure profile with a reference measure profile and/or determining an average deviation of determined measures from reference measure, just to name a few possible examples. According to another embodiment, this capability can be implemented using artificial intelligence (AI). One possible example includes using a neural network that is trained with a plurality of determined impedance measures taken at a plurality of different objects under test in different states. A position, nature, depth and/or other parameter of structural deficiencies may be input as training data for classifying the structural deficiency. This approach is particularly useful, if the criteria of a particular state is not easily definable.

For accessing the at least one reference impedance measure, the evaluation circuit 130 is communicatively connected to the reference measure storage 140. Reference measure storage 140 stores at least one, preferably a plurality of reference impedance measures, wherein each of the at least one reference impedance measure is representative for the impedance of the sensing coil at an object under test in a reference state and/or a reference measuring situation. Each of the at least one reference impedance measures comprises a reference inductance measure and reference resistance measure, wherein the reference inductance measure and the reference resistance measure are different from zero.

In one embodiment, the "reference state" is a well-defined and known state and the "reference measuring situation" is a well-defined and known measuring situation. This can be achieved by performing reference measurements at a known object under test in a known state and under known measuring conditions. This can also be achieved by performing a numerical simulation based on a model of the measuring situation. Such a model can, for instance, be a Dodd and Deeds model or a simulation based on the Maxwell equations.

In another embodiment, the "reference state" and/or "reference measuring situation" are not well-defined though still provide sufficient knowledge about the state/measurement situation. Such a reference measure may also be obtained from the same object under test 150 at an earlier measurement. In this way, a change of the state can be determined. Alternatively or additionally, such a reference measure can be obtained at a different location of the surface 151 of the object under test 150. Even though the state of the difference location may not be well known, this approach is still useful, as cracks, unwanted inclusions, delamination and other deficiencies of the object under test are not homogeneously spread throughout the object under test. These deficiencies are generally limited to a part of the object under test. Determining a impedance measure at one or several different locations at the same object under test 150 can therefore provide a good reference for determining the state of the object under test 150 in general.

The "reference measure storage" can be implemented in various ways. It can be implemented within electronics of the sensor, a control device connected to the sensor (e.g. at an operator's computer), as a remote storage device (e.g. cloud based), and/or the like. When using a remote storage device, a local copy of the data stored at the remote storage device can be obtained and the evaluation circuit 130 can access this copy. In this way, system 100 does not need permanent access to the remote storage device. The storage containing the copy can be regarded as part of the reference measure storage. The copy of data can contain the full set of data stored at the remote storage device. However, the copy can also be limited to a part of the available data. The reference measure storage 140 can be implemented as a non-volatile memory and/or as a volatile memory. Examples for such a memory include RAM (Random Access Memory), MRAM (Magneto-resistive Random Access Memory), EEPROM (Electronically Erasable Read Only Memory) or Flash-memory, just to name a few possible implementations. When using a volatile memory, the memory can be buffered using an energy storage, like a gold cap, another type of capacitor, a battery, an accumulator or the like.

The "impedance measure" includes an inductance measure and an resistance measure. The combination of inductance measure and resistance measure can provide a particularly good insight into the object under test 150. The inductance measure can be related to the extent of eddy currents generated within the object under test 150 in reaction to radiated electromagnetic radiation. The bigger the surface of conducting material directly facing the sensing coil 111, the more eddy currents can develop. At homogeneous materials, eddy currents can develop easier than at materials with discontinuities in a direction perpendicular to the coil axis 113. Therefore, the inductance measure is indicative of the internal structure of a conductive material within the object under test 150. The resistance measure can be indicative of the amount of energy dissipating in the object under test 150. Conductive material with a higher conductivity cause a lower resistance measure than conductive material with a medium conductivity. This short, but not exhaustive list of insights shows that both the inductance measure and the resistance measure can be evaluated at the present disclosure.

The term "measure" refers to a representation of the impedance, inductance and resistance, respectively. The impedance measure can be a complex number reflecting the inductance and resistance of the sensing coil (and, if applicable, its surrounding circuitry). This can be similar for the inductance measure and the resistance measure, where these measures are real numbers. The "measure" can also just provide an indirect indication of the respective quantity. If the sensor coil is part of an oscillating circuit, the inductance measure can be the resonant frequency or a quantity representing the resonant frequency of the oscillating circuit. The resistance measure can be represented by the energy transmitted into the oscillating circuit or a quantity representing this energy. The measure can be an absolute value or a relative value. The measure can be represented as a percentage of a range between a minimum margin and a maximum margin. As long as the measure is sufficiently representative for the impedance, inductance and resistance, respectively, it is suitable for the present disclosure.

System 100 may additionally comprise one or more motion sensors 112 which measures position and/or position changes and/or orientation and/or orientation changes of sensor 110 with respect to object under test 150. In these cases, displacement of sensor 110 should be coupled with displacement of motion sensor 112. One of the easiest ways for achieving this includes incorporating sensor 110 and motion sensor 112 into the same device. Therefore, in Fig. 1, motion sensors $112_1$ and $112_2$ are shown as part of sensor 110. The motion sensors $112_1$ and $112_2$ can fulfil various purposes, e.g. as a displacement sensor, an orientation sensor, a liftoff sensor or the like. It is also possible that the motion sensors $112_1$ and $112_2$ combine various purposes. For instance, both motion sensors $112_1$ and $112_2$ can be distant sensors, e.g. optical or ultrasonic distant sensors, that measure a distance of the sensor 110 from a surface 151. Combining the measurement values of motion sensors $112_1$ and $112_2$ can be used to determine a tilt with regard to a direction perpendicular to surface 151. Using the axis drawn at the right side of Fig. 1, this tilt would occur in the z-x-plane with regard to the z axis. There might be more motion sensors in use (not shown in Fig. 1) that measure tilt in the y-z-plane. Motion sensors $112_1$ and $112_2$ may also have further purposes, like being displacement sensor measuring displacement in x and y directions.

During operation, sensor 110 is brought in vicinity of a surface 151 of the object under test 150. The term "vicinity" is used in the present disclosure for describing a distance d between the sensor 110 and the surface 151. Distance d can be a constant value, i.e. the sensor is positioned in a fixed distance d to the surface. However, distance d can also be varied and various impedance measures can be determined at different distances d. This distance d should not be too large, as eddy current measurement generally has a limited measurement range. In one embodiment, distance d is smaller or equal to 10 centimetres. In another embodiment, distance d is smaller or equal to 5 centimetres. In yet another embodiment, distance d is smaller or equal to 1 centimetre. On the other side, distance d should not be too small. In principle, sensor 110 can touch surface 151, as long as surface 151 is non-conductive or, at a conductive surface 151, a direct contact between windings of sensing coil 111 and the conducting surface 151 is avoided. As relevant objects under test generally have non-conductive surfaces and/or sensing coils are coated for insulating and/or protection purpose, this demand is easily fulfillable. Nevertheless, it might be desirable to avoid contact, e.g. for protection of the coil and/or the object under test from wear and tear. In this case, in one embodiment, distance d is at least 0.5 millimetre, in another embodiment at least 3 millimetres and in yet another embodiment at least 5 millimetres.

The "laminated multi-component material", which can be an object under test 150 according to the present disclosure, can be formed by various composite materials. The object under test is laminated, i.e. there are layers of different materials within the object under test, where the different materials are bonded with each other (or connected in a different way). The different materials at least comprise an insulating material and at least one conductive material. The at least one conductive material is at least partly embedded in the insulating material, i.e. parts of the conductive material are surrounded by the conductive material, but, to a certain extent, there may be parts of the conductive material that are not surrounded by the conductive material. The insulating material can have a conductivity of $10^{-8}$ S/m and below at a temperature of 25 degrees Celsius and can be formed by polymers, epoxy resin, foams or other synthetic materials, just to name a few possible examples of insulating material. The at least one conductive material comprises a material with high conductivity. The term "high conductivity" refers to conductivities of $10^6$ S/m and above at a temperature of 25 degrees Celsius. This material with high conductivity is also referred to as metal within the present disclosure and can be formed by copper, alloy, silver or titanium, just to name a few possible examples of material with high conductivity. Additionally, the at least one conductive material may comprise a material with medium conductivity, where the term "medium conductivity" refers to conductivities in the order of $10^2$ S/m to $10^5$ S/m at a temperature of 25 degrees Celsius. This material with medium conductivity can be formed by carbon fibres, semiconductors, metal powder loaded rubber and metal powder loaded polymers, just to name a few possible examples of materials with medium conductivity.

The different materials of the multi-component material generally have defined structures within the multi-component material. A typical structure for the material with high conductivity can be a mesh of thin threads of the material with high conductivity, a honeycomb structure, a square or diamond shaped structure or the like. The structure can be regular or irregular. It can be produced by punching holes (round, square, diamonds,...) in a foil. However, the structure might also be produced by scratching into a foil and stretching the foil in one direction. The structure can be adapted to a certain purpose, e.g. lightning protection, as disclosed in by L. Herbert: "Design of lightweight perforated copper foil for lightning protection of fiber reinforced plastic, downloadable at https://multimedia.3m.com/mws/media/2285284O/design-of-lightweight-perforated-copper-foil.pdf). This short list, which is neither extensive nor should be regarded as limiting, shows the variety of possible structures. Typical structures for the material with medium conductivity can be threats of the material running in parallel or in a mesh within the multi-component material. However, there are many other possible structures.

The output device 160 can be implemented in various ways and fulfil various purposes. The output device can be an interface to a user and/or to other devices. As an interface to a user, the output device can comprise a display (e.g. a LCD or LED display), an acoustic output device (e.g. a loudspeaker or a buzzer) or the like. An interface to other devices can be formed by various electrical, optical and/or radio-based technologies. The other devices can be formed by a storage, a database, a processing device, etc. Using the output device, determined state information can be output for various purposes. In this way, determined state information can be added to a data collection, can be further analysed and/or can be further interpreted, just to name a few possible usages of output determined state information

System 100 can also include a manipulator 170 that can displace sensor 110 relative to the object under test 150. The manipulator 170 can displace sensor 110 in a direction parallel to the object under test (parallel to x and/or y axis) and/or in a direction perpendicular to the object under test 150 (parallel to z axis) and/or can rotate (around an axis parallel to the z axis) and/or tilt (with regard to the z axis) the sensor 110 relative to the object under test 150. In this way, the object under test can be scanned systematically and a series of measurements can be performed. The manipulator 170 can be formed by a robot arm with the sensor 110 being arranged at the tool tip, a scanning frame with the sensor 110 being attached to a moveable scanning head, or the like. In the embodiment shown in Fig. 1, manipulator 170 is connected and controlled by evaluation circuit 130. However, also other control mechanisms and/or entities can be used.

**Fig. 2** depicts an angular view of a sensing coil 111 in vicinity of a surface 151 of an object under test 150. The axis 113 of sensing coil 111 is parallel to the z-axis shown in Fig. 2. The object under test 150 comprises carbon fibres 152, a metal structure 153 and polymer 154. The carbon fibres 152 run parallel to the y axis shown in Fig. 2. The metal structure 153 is a square structure that is oriented at an angle of 45° relative to the carbon fibres 152. Polymer 154 is visible at the outer surface 151 of the object under test. Though it appears that the object under test 150 is completely layered, this should only facilitate the visibility of the single structures. In reality, the carbon fibres 152 and the metal structure 153 is embedded in polymer 154. The metal structure 153 is a conductive material with high conductivity according to the present disclosure, the carbon fibres 152 is a conductive material with medium conductivity and polymer 154 is an insulating material.

The sensing coil 111 shown in Fig. 2 has a shape of a zero, thus, having a non-symmetrical, elongated shape. Therefore, sensing coil 111 is sensitive regarding its orientation relative to the orientation of the carbon fibres 152 and of the metal structure 153. I.e. the orientation perpendicular to the orientation of the carbon fibres 152 (as shown in Fig. 2) will result in a different impedance measure than an orientation parallel to the orientation of the carbon fibres 152 (rotating the coil 111 by 90° around coil axis 113). In this way, information about the orientation of the fibres and/or deviations from an expected orientation can be determined. It becomes apparent that adaption of the size and shape of the coil to the expected structure within the object under test can be beneficial in some measuring situations and for some measuring and testing requirements. A round, non-elongate sensing coil would be insensitive to the orientation of the carbon fibres 152, which can be beneficial in other measuring situations and testing requirements.

It is also apparent from Fig. 2 that different positions of the sensing coil 111 relative to the object under test 150 can result in different impedance measures, as a varying amount of the metal structure 153 can be in a detection area of the sensing coil 111. Additionally, the position of the coil may have an impact on how easily eddy currents can develop. The present disclosure can handle anisotropy of conductivity within the object under test, both in directions parallel to the surface (e.g. holes vs. metal of the structure or non-homogenous carbon fibres) and in directions perpendicular to the surface (e.g. metal 153, carbon fibres 154, polymer 154). The anisotropy can even result in additional insights regarding the internal structure of the object under test 150. When moving the sensing coil 111 parallel to surface 151 in a scanning movement, the impedance measure will reflect the anisotropy of the object under test 150. More particularly, the series of the impedance measures determined at different positions during the scanning can have a specific impedance measure profile that can be compared with an expected profile represented by the reference impedance measures. It becomes apparent that deviations between a determined profile and an expected profile can provide some particular insights, e.g. regarding false positioning of elements or distorted metal structures.

**Fig. 3** depicts a measurement situation with sensor 111 being in vicinity of an object under test 150 comprising a carbon fibres 152, a metal structure 153 and polymer 154. Fig. 3 additionally shows two different structural deficiencies, an inclusion 155 and a cut 156. The inclusion 155 is located between the carbon fibres 152 and the metal structure 153 and may be a metal particle or a hole (e.g. filled with air or polymer 154). Cut 156 runs through all layer of the object under test 150, i.e. polymer 154, metal structure 153 and carbon fibres 152. It should be noted that there can be many more different structural deficiencies that can be detected with the system according to the present disclosure, e.g. delamination, internal broken fibres, metal strands, etc., just to name a few more possible structural deficiencies.

From Fig. 3, it becomes apparent what the term "state" refers to. In the context of testing objects, to which the present disclosure refers to, the term "state" can refer to a normal state, i.e. a state how the object under test should look like and in which there are no structural deficiencies are detectable. In this case, a determined impedance measure can be within a predefined margin of a reference impedance measure generated at an object under test with a "normal state". The term "state" can also refer to a state, where the object under test 150 comprises a structural deficiency, e.g. an inclusion 155 or a cut 156. In this case, the determined impedance measure can be within a predefined margin of a reference impedance measure representing this structural deficiency at an object under test 150, or the determined impedance measure can deviate in a defined manner from a reference impedance measure generated at an object under test 150 in another state, e.g. a "normal state".

The term "state" can refer to a certain location of the object under test 150, i.e. at the specific location, where the object under test 150 comprises structural deficiencies or does not comprise structural deficiencies. However, the state might also refer to whole object under test 150. The detection of a single structural deficiency can lead to the state of the whole object under test as containing structural deficiencies and being defective. This evaluation can also be based on an estimated severity of the detected structural deficiency. If the deficiency is small or can be regarded as being non-critical, the object under test may still be regarded as being non-defective, but as having some issues.

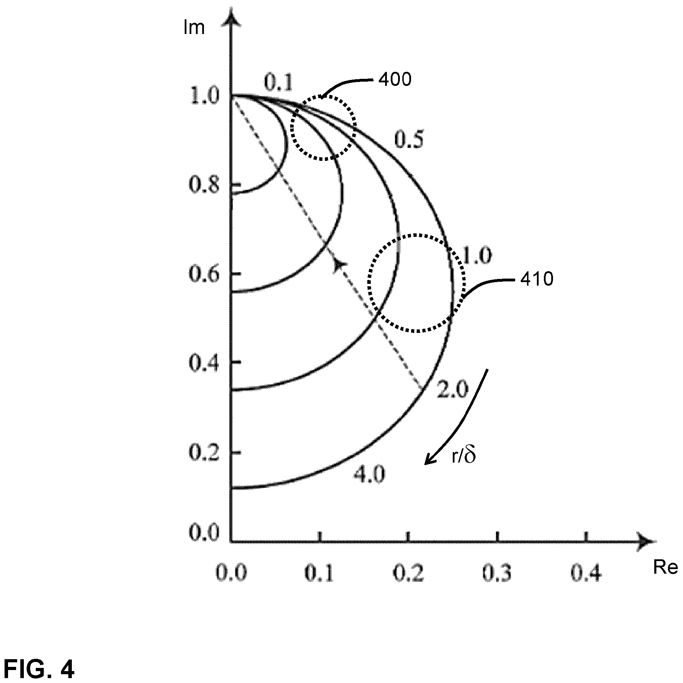

**Fig. 4** depicts a diagram with examples (approximation) of an impedance measure that can be measured with a planar, circular sensing coil 111 in vicinity of an object under test 150. Fig. 4 shows normalised impedance curves with an imaginary part *Im* of the impedance measure (inductance measure) over a real part Re of the impedance measure (resistance measure). The different semicircles represent the impedance measure with constant lift-off *d* at different oscillation frequencies and have a common point at the real part 0 and the imaginary part 1. Decreasing lift-offs result in smaller radii of the semicircles (or semi-ellipse). The dashed line represents impedances with constant frequency:

$$\frac{r}{\delta} = r\sqrt{\pi f \mu \sigma} = const$$

wherein r is the mean radius of the coil, $\delta$ is the skin depth of the electromagnetic radiation within the detected material, f is the applied frequency, $\mu$ is the magnetic permeability, and $\sigma$ is the electric conductivity of the detected material. The dotted circles 400 and 410 indicate regions with typical impedance values. The dotted circle 400 indicates a region typical for carbon fibres, the dotted circle 410 indicates a region typical for metal structures.

**Fig. 5** depicts an embodiment of a possible circuitry for sensing coil 111. In this embodiment, sensing coil 111 is part of an oscillating circuit 113. Besides the sensing coil 111, the oscillating circuit 113 comprises a capacitor 114 connected parallelly to sensing coil 111. The excitation circuit 120 is connected to the oscillating circuit 113 via a coupling resistor 115. The effect of the object under test 150 on the sensing coil 111 is indicated by the coil $157_1$ and resistor $157_2$. Coil $157_1$ indicates the amount of eddy currents generated within the object under test, resistor $157_2$ indicates the dissipation of energy within the object under test. Via coupling resistor 115, the excitation circuit 120 can trigger oscillations of the sensing coil 111, where the oscillations occur at a resonant frequency defined by the oscillating circuit 113 and coil $157_1$ and resistor $157_2$.

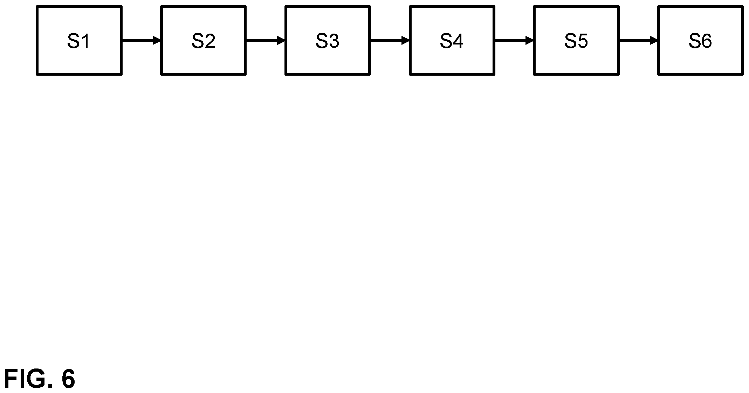

**Fig. 6** depicts a diagram with steps of an embodiment of a method according to the present disclosure. In step S1, a sensor 110 is brought in vicinity of a surface 151 of the object under test 150, the sensor 110 comprising a sensor coil 111. In step S2, the sensor coil 111 is excited to oscillations, using an excitation circuit 120. This causes radiating electromagnetic radiation towards the object under test 150. In step S3, a impedance measure for the sensing coil 111 is determined and output as determined impedance measure. The determined impedance measure comprises an inductance measure representative for an inductance of the sensing coil 111 and a resistance measure representative for a resistance of the sensing coil 111. In step S4, at least one reference impedance measure is loaded from an reference measure storage 140. The at least one reference impedance measure is representative for the impedance of the sensing coil 111 at an object under test 150 in a reference state and comprising a reference inductance measure and a reference resistance measure. In step S5, the determined impedance measure is evaluated in view of the at least one reference impedance measure, thereby determining a deviation between the determined impedance measure and the at least one reference impedance measure. In step S6, a state of the at least one electrically conductive material 152, 153 is determined based on determined deviation.

The terminology used herein is for the purpose of describing particular embodiments only and is not intended to be limiting of the present disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The conjunction "and/or" between a first feature and a second feature should be understood in such a way that a first embodiment comprises the first feature, a second embodiment comprises the feature and a third embodiment comprises both the first feature and the second feature.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the present disclosure in the form disclosed. Many modifications and variations will be apparent to those of ordinary skill in the art without departing from the scope and spirit of the present disclosure. The embodiment was chosen and described in order to best explain the principles of the present disclosure and the practical application, and to enable others of ordinary skill in the art to understand the present disclosure for various embodiments with various modifications as are suited to the particular use contemplated.

**Claims**

1. A system for non-destructive testing of a laminated multi-component object under test, the object under test (150) at least comprising an insulating material (154) and at least one electrically conductive material (152, 153), the at least one electrically conductive material (152, 153) comprising a metal structure (153), the at least one electrically conductive material (152, 153) being at least partly embedded in the insulating material (154), the object under test (150) preferably being a laminated carbon fibre reenforced material with embedded metal structure, the system comprising:

> a sensor (110) comprising a sensing coil (111), the sensor (110) being placeable in a vicinity of a surface (151) of the object under test (150),
> an excitation circuit (120) being communicatively connected to the sensing coil (111) and being configured to excite the sensing coil (111) to oscillations,
> a reference measure storage (140) containing at least one reference impedance measure, the at least one reference impedance measure being representative for the impedance of the sensing coil (111) at an object under test (150) in a reference state and comprising a reference inductance measure and a reference resistance measure, and

an evaluation circuit (130) being communicatively connected to the excitation circuit (120) and the reference measure storage (140), wherein the evaluation circuit (130) is configured to control the excitation circuit (120) and to evaluate oscillations of the sensing coil (111), thereby determining an impedance measure for the sensing coil (111), wherein the impedance measure comprises an inductance measure representative for an inductance of the sensing coil (111) and a resistance measure representative for a resistance of the sensing coil (111), wherein the evaluation circuit (130) is further configured to access the at least one reference impedance measure and to evaluate a determined impedance measure in view of the at least one reference impedance measure, thereby determining a deviation between the determined impedance measure and the at least one reference impedance measure, and wherein the evaluation circuit (130) is further configured to determine a state of the at least one electrically conductive material (152, 153) based on determined deviation.

2. System according to claim 1, wherein the sensor (110) is displaceable in a direction parallel to the surface (151) of the object under test (150) and/or in a direction perpendicular to the surface (151) of the object under test (150) and/or in a direction changing the orientation of the sensor (110) relative to the surface (151) of the object under test (150), wherein, during displacing, the evaluation circuit (130) determines multiple inductance and resistance measures, and wherein the evaluation circuit (130) is configured to generate an array of measures based on the determines multiple inductance and resistance measures.

3. System according to claim 1 or 2, additionally comprising an displacement sensor (112), wherein displacement of the sensor (110) and of the displacement sensor (112) are coupled with each other and wherein the displacement sensor (112) is configured to measure displacement relative to the surface (151) of the object under test (150), and wherein the displacement sensor (112) is communicatively connected to the evaluation circuit (130) and configured to output displacement measures to the evaluation circuit (130).

4. System according to any of claims 1 to 3, additionally comprising a liftoff sensor (112), wherein displacement of the sensor (110) and of the liftoff sensor (112) are coupled with each other, wherein the liftoff sensor (112) is configured to measure the distance between the sensor (110) and the surface (151) of the object under test (150), and wherein the liftoff sensor (112) is communicatively connected to the evaluation circuit (130) and configured to output liftoff measures to the evaluation circuit (130).

5. System according to any of claims 1 to 4, additionally comprising an orientation sensor (112), wherein orientation changes of the sensor (110) and of the orientation sensor (112) are coupled with each other, wherein the orientation sensor (112) is configured to measure a tilt and/or orientation change of the sensor (110), particularly with regard to the surface (151) of the object under test (150), and wherein the orientation sensor (112) is communicatively connected to the evaluation circuit (130) and configured to output orientation measures to the evaluation circuit (130).

6. System according to any of claims 1 to 5, additionally comprising a manipulator (170), wherein the sensor (110) is attached to a moveable part of the manipulator (170), wherein the manipulator (170) is configured to displace the sensor (110) in at least one direction parallel and/or perpendicular to the surface (151) of the object under test (150).

7. System according to any of claims 1 to 6, wherein the sensing coil (111) is connected to a capacitor (114), thus forming an oscillating circuit (113), and wherein the excitation circuit (120) excites the oscillating circuit (113) to oscillations at an oscillating frequency, preferably a resonant frequency.

8. System according to claim 7, wherein oscillating circuit (113) additionally comprises an adaptable capacitance and/or an adaptable inductance, thus allowing adapting the resonant frequency of the oscillating circuit to the object under test.

9. System according to any of claims 1 to 8, wherein the size and/or shape of the sensing coil (111) is adapted to the object under test (150).

10. System according to any of claims 1 to 9, wherein the sensor comprises several sensing coils (111), wherein the sensing coils (111) are displaced relatively to each other, and wherein, for each of the several sensing coils (111), an impedance measure is determined, respectively.

11. System according to any of claims 1 to 10, wherein a ferromagnetic material is arranged at the centre of the sensing coil (111), wherein the ferromagnetic material preferably is a ferrite.

12. System according to any one of claims 1 to 11, wherein the evaluation circuit (130) is configured to store a determined impedance measure in the reference measure storage (140), thus creating a new reference impedance measure for future usage.

13. System according to any of claims 1 to 12, additionally comprising an output device (160), wherein the output device (160) is connected to the evaluation circuit (130) and wherein the evaluation circuit (130) is configured to output a determined state of the object under test (150) via the output device (160).

14. Usage of a system according to any of claims 1 to 13 for non-destructive testing a laminated multi-component object under test (150), the object under test (150) at least comprising an insulating material (154) and at least one electrically conductive material (152, 153), the at least one electrically conductive material (152, 153) comprising a metal structure (153), the at least one electrically conductive material (152, 153) being at least partly embedded in the insulating material (154), the object under test (150) preferably being a laminated carbon fibre reenforced material with embedded metal structure.

15. Method for non-destructive testing of a laminated multi-component object under test (150), the object under test (150) at least comprising an insulating material (154) and at least one electrically conductive material (152, 153), the at least one electrically conductive material (152, 153) comprising a metal structure (153), the at least one electrically conductive material (152, 153) being at least partly embedded in the insulating material (154), the object under test (150) preferably being a laminated carbon fibre reenforced material with embedded metal structure, preferably for using a system according to any of claims 1 to 13, the method comprising:

bringing (S1) a sensor (110) in vicinity of a surface (151) of the object under test (150), the sensor (110) comprising a sensor coil (111),
exciting (S2) the sensor coil (111) to oscillations, thereby radiating electromagnetic radiation towards the object under test (150),
determining (S3) a determined impedance measure for the sensing coil (111), the determined impedance measure comprising an inductance measure representative for an inductance of the sensing coil (111) and a resistance measure representative for a resistance of the sensing coil (111),
accessing (S4) at least one reference impedance measure, the at least one reference impedance measure being representative for the impedance of the sensing coil (111) at an object under test in a reference state and comprising a reference inductance measure and a reference resistance measure,

evaluating (S5) a determined impedance measure in view of the at least one reference impedance measure, thereby determining a deviation between the determined impedance measure and the at least one reference impedance measure, and

determining (S6) a state of the at least one electrically conductive material (152, 153) based on determined deviation.

**FIG. 1**

EP 4 764 487 A1

**FIG. 2**

EP 4 764 487 A1

FIG. 3

**FIG. 4**

EP 4 764 487 A1

FIG. 5

EP 4 764 487 A1

S1 → S2 → S3 → S4 → S5 → S6

FIG. 6

## EUROPEAN SEARCH REPORT

Europäisches Patentamt
European Patent Office
Office européen des brevets

**Application Number**

EP 24 22 1196

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2011 076690 A1 (RIKEN KK [JP]) 22 December 2011 (2011-12-22) | 1,7-10, 12,13 | INV. G01N27/9013 |
| Y | * figures 3,4,5,6,9 * <br> * paragraphs [0005], [0020], [0048], [0051], [0052], [0057], [0059], [0060], [0065] * | 3-6,11 | |
| | ----- | | |
| X | US 2013/132012 A1 (TIAN YONG [US] ET AL) 23 May 2013 (2013-05-23) | 1,2, 7-10, 12-14 | |
| Y | * figures 5,6,7 * <br> * paragraphs [0006], [0024], [0029] * | 3-6,11 | |
| | ----- | | |
| X | US 4 922 201 A (VERNON SUSAN N [US] ET AL) 1 May 1990 (1990-05-01) | 15 | |
| Y | * abstract * <br> * figures 4,5 * <br> * column 3, lines 32-45 * <br> * column 8, lines 43-68 * <br> * claim 1 * | 11 | |
| | ----- | | **TECHNICAL FIELDS SEARCHED (IPC)** |
| Y | DE 10 2013 103004 A1 (SURAGUS GMBH [DE]) 21 August 2014 (2014-08-21) <br> * paragraphs [0011], [0020], [0021] * | 3-6 | G01N |
| | ----- | | |

The present search report has been drawn up for all claims

| Place of search | Date of completion of the search | Examiner |
|---|---|---|
| Munich | 2 May 2025 | Kratz, Dorothee |

EPO FORM 1503 03.82 (P04C01)

## ANNEX TO THE EUROPEAN SEARCH REPORT
## ON EUROPEAN PATENT APPLICATION NO.

EP 24 22 1196

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2025

| Patent document cited in search report | Publication date | Patent family member(s) | Publication date |
|---|---|---|---|
| DE 102011076690 A1 | 22-12-2011 | DE 102011076690 A1<br>JP 2012002770 A | 22-12-2011<br>05-01-2012 |
| US 2013132012 A1 | 23-05-2013 | US 2013132012 A1<br>WO 2013074263 A1 | 23-05-2013<br>23-05-2013 |
| US 4922201 A | 01-05-1990 | NONE | |
| DE 102013103004 A1 | 21-08-2014 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102010048917 A1

- DE 102013103004 A1